# EUROPÄISCHE PATENTANMELDUNG

(11) **EP 1 537 932 A1**
(43) Veröffentlichungstag der Anmeldung: **08.06.2005**
(21) Anmeldenummer: 04105988.2
(22) Anmeldetag: 23.11.2004
(51) Int. Cl.: B23B 51/00

(54) **Schälbohrer**

(30) Priorität: 02.12.2003 DE 20318631 U
(71) Anmelder: Reiner Quanz GmbH & Co. KG, 42859 Remscheid (DE)
(72) Erfinder: Quanz, Reiner, 42859, Remscheid (DE)
(74) Vertreter: Patentanwälte Dr. Solf & Zapf

(57) **Zusammenfassung**

Die Erfindung betrifft einen Schälbohrer (1) zum Bohren von Löchern in dünnen Werkstücken, wie Blechen und dergleichen, mit einem um eine Längsachse (2) rotierend anzutreibenden Schneidenteil (4) mit einer im Wesentlichen konischen Mantelfläche (6) und mindestens einer durch eine Spannut (8) zwischen einer Nutflanke (12) und der konischen Mantelfläche (6) gebildeten, einen über die Längsachse zunehmenden Bohrdurchmesser definierenden Schneidkante. Die Spannut (8) und die Schneidkante (10) verlaufen über den Schneidenteil (4) hinweg spiralförmig, wobei die Schneidkante (10) über ihren spiralförmigen Verlauf hinweg mit einer weitgehend konstanten Schneidengeometrie ausgebildet ist.

## Beschreibung

Die vorliegende Erfindung betrifft einen Schälbohrer zum Bohren von Löchern in dünnen Werkstücken, wie Blechen und dergleichen, mit einem um eine Längsachse rotierend anzutreibenden Schneidenteil mit einer im Wesentlichen konischen Mantelfläche und mindestens einer durch eine Spannut zwischen einer Nutflanke und der konischen Mantelfläche gebildeten, einen über die Längsachse zunehmenden Bohrdurchmesser definierenden Schneidkante.

Solche Schälbohrer, die oft auch Schälaufbohrer oder Blechschälbohrer genannt werden, dienen zum Bohren von Löchern mit unterschiedlichen Durchmessern in dünnen Materialien, wie Metallblechen. Durch die Konizität des Schneidenteils nimmt der Bohrdurchmesser von einem minimalen Durchmesser über den Verlauf der Schneidkante bis zu einem maximalen Durchmesser stetig zu, so dass über die Eindringtiefe der Lochdurchmesser des gebohrten Loches bestimmt werden kann. Es können auch vorhandene kleinere Löcher auf einen bestimmten größeren Durchmesser aufgebohrt werden.

Derartige Schälbohrer sind beispielsweise in der DE 29 21 190 C2 und in dem DE-U-90 16 504 jeweils beschrieben. Bei der aus der zweitgenannten Veröffentlichung bekannten Ausführung ist von Vorteil, dass in zwei gleichartigen Spannuten identische, in Drehrichtung kongruente Markierungen in Form von den jeweiligen Bohrdurchmesser angebenden Skalen angeordnet sind. Dies erlaubt auch bei Rotation, d. h. auch während des Bohrvorganges, eine genaue Sichtkontrolle des jeweils erreichten Bohrdurchmessers, so dass der gewünschte Lochdurchmesser sehr genau und ohne Nachmessen erreicht werden kann.

Die bekannten Schälbohrer weisen bisher grundsätzlich geradlinig axial verlaufende Schneidkanten und Spannuten auf. Die Bohreigenschaften sind dabei nicht optimal; je nach Auslegung der Schneidengeometrie, insbesondere des sogenannten Schnittwinkels zwischen der konischen Mantelfläche und einer angrenzenden Nutflanke der Spannut, hat der Bohrer einen unruhigen Schnitt, was zu einem "Rappeln" im Bohrloch und/oder zu unrunden Löchern führen kann, und/oder der Bohrer hat die sehr nachteilige Tendenz, sich in das Bohrloch hineinzuziehen, was zu große Löcher zur Folge hat.

Der vorliegenden Erfindung liegt die Aufgabe zugrunde, einen Schälbohrer der eingangs beschriebenen gattungsgemäßen Art mit deutlich verbesserten Bohreigenschaften zu schaffen.

Erfindungsgemäß wird dies dadurch erreicht, dass die Spannut und die Schneidkante - bzw. bei mehreren, z. B. zwei Spannuten jede Spannut und jede Schneidkante - über den Schneidenteil hinweg spiralförmig verlaufen, wobei die Schneidkante über ihren spiralförmigen und im Bohrdurchmesser zunehmenden Verlauf hinweg mit einer weitgehend konstanten Schneidengeometrie ausgebildet ist, und zwar ist insbesondere ein zwischen der konischen Mantelfläche und der angrenzenden Nutflanke der Spannut gebildeter Schnittwinkel über den Verlauf der Schneidkante hinweg weitgehend konstant.

Spiralnuten an sich sind zwar bei andersartigen, nicht gattungsgemäßen Werkzeugen grundsätzlich bekannt, beispielsweise bei üblichen Spiralbohrern und auch bei sogenannten Stufenbohrern, siehe dazu beispielsweise die DE-U- 94 14 659 und die DE-U- 200 04 523. Spiralbohrer sind aber mit ihren Hauptschneiden nur für einen bestimmten Bohrdurchmesser ausgelegt, und Stufenbohrer bestehen aus axial aufeinanderfolgenden zylindrischen Abschnitten, die ebenfalls jeweils nur einen bestimmten Bohrdurchmesser definieren. Solche Bohrer sind folglich nicht mit einem gattungsgemäßen Schälbohrer wegen dessen stetig zunehmendem Bohrdurchmesser vergleichbar. Daher liegt eine Übertragung von für Spiral- und Stufenbohrer spezifischen Merkmalen auf einen gattungsgemäßen Schälbohrer nicht nahe. Im Übrigen ergäbe sich daraus auch nicht das erfindungswesentliche Merkmal der über den im Bohrdurchmesser zunehmenden Verlauf der Schneidkante im Wesentlichen konstanten Schneidengeometrie.

Entsprechendes gilt auch hinsichtlich des Dokumentes FR 820 527 A, in dem ein artfremder Fräser beschrieben ist, der nicht bohrend in ein Loch arbeitet, sondern quer zu seiner Rotationsachse über ein Werkstück hinweg geführt wird. Daraus resultiert eine völlig andere Schneidengeometrie, und zwar wird jede Schneidkante von einer radial über die Fläche des etwa konischen Schneidenteils vorstehenden, spiralförmig verlaufenden Rippe gebildet, woraus auch eine andere Herstellung des Werkzeugs resultiert. So muß erst jede Rippe an einem Werkzeug-Rohling gefräst werden, und anschließend wird die Schneidkante an der Rippe über ihren Verlauf hinweg geschliffen.

Der erfindungsgemäße Schälbohrer wird bevorzugt durch bestimmte Schleifmaßnahmen hergestellt. Dazu wird zunächst die bzw. jede spiralförmige Spannut in den Schneidenteil unter entsprechender Drehbewegung des Schneidenteils eingeschliffen. Nachfolgend wird die Mantelfläche ausgehend von der/jeder Schneidkante in Umfangsrichtung mit einem radialen Hinterschliff geschliffen, und zwar wird vorteilhafterweise die Mantelfläche in mehreren axial aufeinanderfolgenden, kegelstumpf - bzw. kegelschichtartigen Schleifzonen geschliffen, wobei jeweils in einem axial mittigen Bereich jeder Schleifzone der konstante Schnittwinkel mit - bedingt durch den Spiralverlauf der Schneidkante - axial beidseitigen, geringfügigen Abweichungen vorliegt. Dieses Schleifen erfolgt unter entsprechender Drehung des Bohrers mit einer radial zugeführten und um eine zur Bohrerlängsachse parallele Scheibenachse rotierenden Schleifscheibe, die als Kegelstumpf (Kegelschicht) mit einer umfänglichen, entsprechend dem jeweiligen Konuswinkel des Schneidenteils schräg zur Längsachse verlaufenden Schleiffläche ausgebildet ist. Durch die erfindungsgemäßen Maßnahmen entsteht eine über ihren Verlauf hinweg leicht "wellige" Schneidkante, wobei Übergänge zwischen den einzelnen Schleifzonen noch derart beigearbeitet werden können, dass sie - zumindest optisch - nicht mehr oder kaum noch wahrnehmbar sind.

Der erfindungsgemäße Schälbohrer zeichnet sich durch optimierte Bohreigenschaften aus, wozu bevorzugt der Schneidenteil einen Konuswinkel aufweist, der größer als 23° ist. Es kann ein effektiver, "aggressiver" Schnitt mit Bildung von Wendelspänen (Vermeidung von nachteiligen Bruchspänen) erreicht werden, wobei die Späne optimal über die Spiralnut nach hinten entgegen der Bohrrichtung abgeführt werden, so dass auch Kratzbeschädigungen der Werkstückoberfläche vermieden werden. Trotz des aggressiven Schnittes hat der erfindungsgemäße Bohrer keine Tendenz zum Selbsteinziehen in das Bohrloch. Zudem wird eine hohe Laufruhe erreicht, und es können qualitativ saubere, exakte und echt kreisförmige Löcher gebohrt werden.

Weitere vorteilhafte Ausgestaltungsmerkmale der Erfindung sind in den Unteransprüchen sowie der folgenden Beschreibung enthalten.

Anhand eines bevorzugten, in der Zeichnung veranschaulichten Ausführungsbeispiels soll die Erfindung genauer erläutert werden. Dabei zeigen:
- Fig. 1: eine Seitenansicht eines erfindungsgemäßen Schälbohrers mit zusätzlicher Darstellung eines Teils einer Schleifscheibe zum Herstellen eines radialen Hinterschliffs,
- Fig. 2: eine rückwärtige Axialansicht in Pfeilrichtung 11 gemäß Fig. 1,
- Fig. 3: einen vergrößerten Querschnitt im Bereich eines bevorzugten Einspannschaftes in der Ebene III - III gemäß Fig. 1,
- Fig. 4: eine vergrößerte Detailansicht des Bereichs IV gemäß Fig. 1 einer Anbohrspitze,
- Fig. 5: eine vordere Stirnansicht auf die Anbohrspitze in Pfeilrichtung V gemäß Fig. 4,
- Fig. 6: eine zweite Ausführungsform eines erfindungsgemäßen Schälbohrers in einer Seitenansicht wie in Fig. 1 und
- Fig. 7: eine Variante zu Fig. 1.

Ein erfindungsgemäßer Schälbohrer 1 weist einen um eine Längsachse 2 rotierend anzutreibenden Schneidenteil 4 auf, der seinerseits eine im Wesentlichen konische Mantelfläche 6 und mindestens eine durch eine Spannut 8 gebildete Schneidkante 10 aufweist. Aufgrund der Konizität definiert die Schneidkante 10 einen in Richtung der Längsachse 2 zunehmenden Bohrdurchmesser.

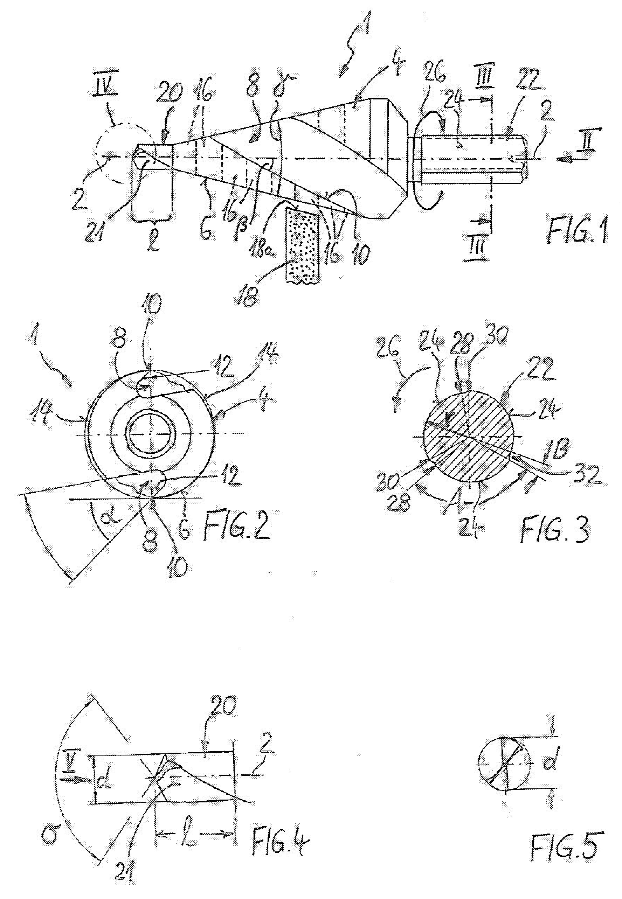

Erfindungsgemäß verlaufen die Spannut 8 und die Schneidkante 10 über den Schneidenteil 4 hinweg spiralförmig. Dabei ist die Schneidkante 10 über ihren spiralförmigen Verlauf hinweg mit einer weitgehend konstanten Schneidengeometrie ausgebildet. Dies bedeutet, dass insbesondere ein zwischen der Mantelfläche 6 bzw. einer an die Schneidkante 10 angelegten Tangente und einer Nutflanke 12 der Spannut 8 gebildeter Schnittwinkel α über den Verlauf der Schneidkante 10 hinweg weitgehend konstant ist; siehe hierzu auch Fig. 2. Mit Vorteil liegt der Schnittwinkel α etwa im Bereich von 15° bis 25° und beträgt insbesondere etwa 19° ± 1°.

In den dargestellten, bevorzugten Ausführungsformen weist der Schneidenteil 4 zwei gleichartig sprialförmige Spannuten 8 mit entsprechend zugehörigen sprialförmigen Schneidkanten 10 in radialsymmetrischer Umfangsverteilung (jeweils diametral gegenüberliegend) auf. Je nach Größe bzw. Bohrdurchmesserbereich können auch mindestens drei Spannuten 8 mit Schneidkanten 10 vorgesehen sein.

Die bzw. jede Spannut 8 ist in den Schneidenteil 4 eingeschliffen. Dies erfolgt mit einer entsprechend der Nutgeometrie profilierten Schleifscheibe (nicht dargestellt) unter Drehung des Schneidenteils 4 entsprechend dem jeweils gewünschten Spiralverlauf. Nachfolgend wird die Mantelfläche 6 ausgehend von der/jeder Schneidkante 10 in Umfangsrichtung mit einem radialen Hinterschliff 14 (siehe Fig. 2) geschliffen. Insofern ist die Mantelfläche 6 nicht exakt konisch, sondern weicht bereichsweise radial nach innen von einer idealen Konusform ab (Fig. 2). Wie in Fig. 1 angedeutet ist, wird die Mantelfläche 6 bevorzugt in mehreren axial aufeinanderfolgenden, kegelstumpf- bzw. kegelschichtarigen Schleifzonen 16 geschliffen. Diese Schleifzonen 16 sind in Fig. 1 durch gestrichelte Linien angedeutet, wobei die Übergänge in der Realität jedoch nicht oder nur kaum sichtbar sind. Dieses Schleifen erfolgt unter entsprechender Drehung des Schneidenteils 4 mit einer Schleifscheibe 18, die als Kegelstumpf bzw. Kegelscheibe mit einer entsprechend der Konusform des Schneidenteils 4 schräg verlaufenden Schleiffläche 18a ausgebildet ist. Das Schleifen erfolgt nacheinander in den jeweiligen Schleifzonen 16. Vorzugsweise ist die Schleifscheibe 18 mit einer größeren Breite als die axiale Länge der einzelnen Schleifzonen 16 ausgebildet, wobei die Schleifscheibe 18 von Schleifzone zu Schleifzone jeweils nur um die axiale Länge bzw. Dicke der einzelnen Schleifzonen 16 versetzt wird. Auf diese Weise wird erreicht, dass die Übergänge durch eine Überlappung bearbeitet und dadurch nahezu unsichtbar werden. Die Schleifvorgänge werden derart gesteuert, dass jeweils in einem axial mittigen Bereich jeder Schleifzone 16 der konstante Schnittwinkel α mit - bedingt durch den Spiralverlauf der Schneidkante 10 - axial beidseitigen, geringfügigen Abweichungen vorliegt. Insgesamt ergibt sich dadurch ein schwach welliger Verlauf der jeweiligen Schneidkante 10.

Es ist weiterhin vorteilhaft, wenn die Mantelfläche 6 jeweils ausgehend von der Schneidkante 10 in einem sich über einen Umfangswinkel von insbesondere etwa 35° hinweg erstreckenden Hinterschliffbereich mit abnehmendem Radius hinterschliffen ist, wobei sich vorzugsweise an diesen Hinterschiffbereich ein Auslaufbereich mit konstantem Radius anschließt. Diese Angaben sind bezogen auf zur Längsachse 2 senkrechte Querschnittsebenen. Hierbei beträgt der Hinterschliff 14 jeweils an einem in Umfangsrichtung um 20° hinter der Schneidkante 10 liegenden Meßpunkt in radialer Richtung etwa 0,07 mm bis 0,12 mm, insbesondere etwa 0,1 mm. Jede Schleifzone 16 weist eine axial gemessene Länge bzw. Höhe im Bereich von 2 mm bis 8 mm, insbesondere etwa 5 mm auf.

Jede Schneidkante 10 definiert in jedem Punkt ihres Verlaufs einen bestimmten zwischen einer angelegten Tangente und der Längsachse 2 gebildeten Spiralwinkel β (siehe Fig. 1). Hierbei sind drei verschiedene Varianten möglich. Bei einer ersten Ausführung steigt der Spiralwinkel β über den Verlauf der Schneidkante 10 hinweg mit zunehmendem Bohrdurchmesser an, und zwar insbesondere etwa in einem Bereich von ca. 25° bis ca. 32°. Bei einer zweiten Ausführung kann Spiralwinkel β über den Verlauf der Schneidkante 10 hinweg im Wesentlichen konstant sein und dabei insbesondere etwa 25° betragen. Bei einer dritten Variante nimmt der Spiralwinkel β über den Verlauf der Schneidkante 10 hinweg mit zunehmendem Bohrdurchmesser ab, und zwar insbesondere etwa in einem Bereich von ca. 30° bis ca. 25°.

Der Schneidenteil 4 bzw. seine Mantelfläche 6 weist - je nach Bohrdurchmesserbereich und Länge - einen Konuswinkel γ im Bereich von 20° bis 50°, insbesondere 22° bis 30° auf. Besonders gute Bohreigenschaften (gutes Schneidverhalten (Freischneiden) und sehr ruhiger Lauf) können mit einem Konuswinkel γ > 23° erreicht werden; bei der in Fig. 1 dargestellten Ausführung beträgt er beispielhaft etwa 26° und gemäß Fig. 7 etwa 24°.

Wie sich weiterhin aus Fig. 1, 6 und 7 ergibt, geht bei den bevorzugten Ausführungen der Schneidenteil 4 auf seiner Seite mit kleinstem Durchmesser in eine Anbohrspitze 20 über, die bevorzugt nach Art eines üblichen Spiralbohrers ausgebildet sein kann. Gemäß Fig. 1, 4, 5, 6 und 7 weist die Anbohrspitze 20 mit im Wesentlichen zylindrischer Form eine bestimmte Länge I auf und definiert einen Bohrdurchmesser d, der - je nach kleinstem Bohrdurchmesser des konischen Schneidenteils 4 - im Bereich von 3 bis 15 mm liegen kann. Für verschiedene Größenabstufungen des Schneidenteils 4 kann d z.B. 4, 7, 11, 14 oder 15 mm betragen. Die Ausführung der zylindrischen Anbohrspitze 20 hat den Vorteil, dass ein mehrmaliges Nachschleifen der Anbohrspitze 20 möglich ist, ohne den Durchmesser d zu ändern. Die Anbohrspitze 20 kann mit einem üblichen Kreuzschliff und mit einem Spitzenwinkel **σ** im Bereich von 115° bis 120°, insbesondere etwa 118° ausgebildet sein.

Hierbei ist es weiterhin vorteilhaft, wenn die bzw. jede Spannut 8 des Schneidenteils 4 durchlaufend bis über die Anbohrspitze 20 hinweg und bis zu deren vorderem Ende verläuft, d. h. jede Spannut 8 geht bevorzugt in eine Spiralnut 21 der Anbohrspitze 20 über.

Gemäß Fig.1, 6 und 7 schließt sich an den Schneidenteil 4 auf seiner Seite mit größerem Durchmesser ein Einspannschaft 22 zum drehmomentschlüssigen Einsetzen in ein Spannfutter einer Antriebsmaschine an. Bei diesem Einspannschaft 22 handelt es sich bevorzugt um eine Ausführung, wie sie in der EP 1 340 570 A1 beschrieben ist. Auf diese Veröffentlichung wird an dieser Stelle in vollem Umfange Bezug genommen. Demnach weist der Einspannschaft 22 eine Anzahl n ≥ 2 von Spannflächen 24 zur Anlage von Spannbacken eines Spannfutters (nicht dargestellt) auf, wobei jede Spannfäche 24 - in einer vorbestimmten Werkzeug- Rotationsrichtung 26 gesehen - zwischen einem Anfangspunkt 28 und einem Endpunkt 30 einen Schaftradius r aufweist, der von einem minimalen Wert am Anfangspunkt 28 über einen Anstiegswinkelbereich A hinweg auf einen maximalen Wert am Endpunkt 30 ansteigt. An jeden auf dem maximalen Radius liegenden Endpunkt 30 jeder Spannfläche 24 schließt sich - in der Rotationsrichtung 26 gesehen - eine radial relativ steil abfallende Übergangsfläche 32 an, die über einen Abfallwinkelbereich B hinweg bis zu dem auf dem minimalen Radiuswert liegenden Anfangspunkt 28 der nächsten benachbarten Spannfläche 24 abfällt. Dabei ist der Anstiegswinkelbereich A deutlich größer als der Abfallwinkelbereich B. Insbesondere beträgt der Anstiegswinkelbereich A jeder Spannfläche 24 etwa 85 % bis 95 %, insbesondere etwa 90 %, eines sogenannten Spannschaft-Teilungswinkels 360°/n. Durch diese bevorzugte Ausgestaltung wirken die Spannbacken des Spannfutters stets gegen radial rampenartig ansteigende Spannflächen 24, wodurch auch bei relativ losem Spannen eine sichere Drehmittnahme durch eine Art Selbsthemmeffekt erreicht wird.

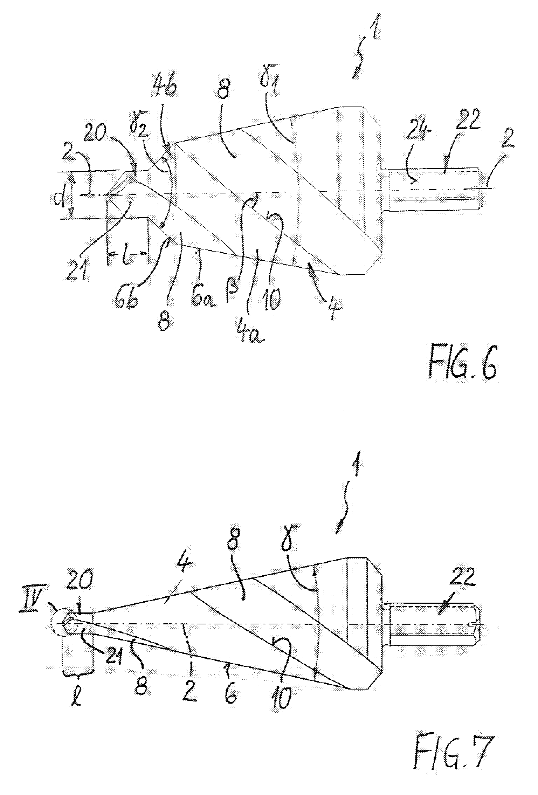

Bei der in Fig. 6 veranschaulichten Ausführungsform besteht der Schneidenteil 4 aus zwei Abschnitten 4a und 4b mit im Wesentlichen konischen Mantelflächen 6a bzw. 6b.

Ein hinterer Abschnitt 4a überdeckt durch seine Konusform einen Bereich von größeren Bohrdurchmessern, während ein vorderer Abschnitt 4b kleinere Bohrdurchmesser definiert. Dabei weist der hintere Abschnitt 4a einen kleineren Konuswinkel γ₁ auf, der dem Winkel γ gemäß Fig. 1 bzw. 7 entsprechen kann, so dass er ebenfalls im Bereich von 20° bis 50° liegt und insbesondere größer als 23° ist. Bei der in Fig. 6 dargestellten Ausführung beträgt er beispielhaft etwa 24°. Der vordere Schneidenteil-Abschnitt 4b, über den der hintere Abschnitt 4a mittelbar in die Anbohrspitze 20 übergeht, weist einen größeren Konuswinkel γ₂ von beispielsweise etwa 90° auf. Jede Spannut 8 verläuft auch durchgehend über den vorderen Abschnitt 4b hinweg. Dadurch wird durch jede Spannut 8 auch im Bereich des vorderen Abschnittes 4b eine entsprechende Schneidkante gebildet. Bei dieser Ausführung bildet der vordere Abschnitt 4b praktisch einen Übergangskonus zwischen der Anbohrspitze 20 und dem hinteren Abschnitt 4a. Diese Ausführung eignet sich vor allem für Schälbohrer mit großen Bohrdurchmessern, wobei zwischen der Anbohrspitze 20 und dem hinteren Abschnitt 4a das Bohrloch entsprechend zügiger aufgebohrt wird. Der eigentliche gewünschte Bohrdurchmesser wird dann mit dem hinteren Abschnitt 4a erzeugt.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Schälbohrer (1) zum Bohren von Löchern in dünnen Werkstücken, wie Blechen und dergleichen, mit einem um eine Längsachse (2) rotierend anzutreibenden Schneidenteil (4) mit einer im Wesentlichen konischen Mantelfläche (6) und mindestens einer durch eine Spannut (8) zwischen einer Nutflanke (12) und der konischen Mantelfläche (6) gebildeten, einen über die Längsachse zunehmenden Bohrdurchmesser definierenden Schneidkante (10),
**dadurch gekennzeichnet, dass** die Spannut (8) und die Schneidkante (10) über den Schneidenteil (4) hinweg spiralförmig verlaufen, wobei die Schneidkante (10) über ihren spiralförmigen Verlauf hinweg mit einer weitgehend konstanten Schneidengeometrie ausgebildet ist.

2. Schälbohrer nach Anspruch 1,
**dadurch gekennzeichnet, dass** dieSchneidkante(10)miteinem zwischen der Mantelfläche (6) und der Nutflanke (12) der Spannut (8) gebildeten, über den Verlauf der Schneidkante (10) hinweg weitgehend konstanten Schnittwinkel (α) ausgebildet ist.

3. Schälbohrer nach Anspruch 1 oder 2,
**dadurch gekennzeichnet, dass** derSchneidenteil(4) mindestens zwei gleichartig spiralförmige Spannuten (8) mit entsprechend zugehörigen spiralförmigen Schneidkanten (10) in radialsymmetrischer Umfangsverteilung aufweist.

4. Schälbohrer nach einem der Ansprüche 1 bis 3,
**dadurch gekennzeichnet, dass** die/jede Spannut (8) in den Schneidenteil (4) eingeschliffen ist.

5. Schälbohrer nach einem der Ansprüche 1 bis 4,
**dadurch gekennzeichnet, dass** die Mantelfläche (6) ausgehend von der/jeder Schneidkante (10) in Umfangsrichtung mit einem radialen Hinterschliff (14) geschliffen ist.

6. Schälbohrer nach einem der Ansprüche 2 bis 5,
**dadurch gekennzeichnet, dass** die Mantelfläche (6) in mehreren axial aufeinanderfolgenden, kegelstumpf- bzw. kegelschichtartigen Schleifzonen (16) geschliffen ist, wobei jeweils in einem axial mittigen Bereich jeder Schleifzone (16) der konstante Schnittwinkel (α) mit axial beidseitigen geringfügigen Abweichungen vorliegt.

7. Schälbohrer nach Anspruch 5 oder 6,
**dadurch gekennzeichnet, dass** die Mantelfläche (6) jeweils ausgehend von der Schneidkante (10) in einem sich über einen Umfangswinkel von insbesondere etwa 35° hinweg erstreckenden Hinterschliffbereich mit abnehmendem Radius hinterschliffen ist, wobei sich vorzugsweise an den Hinterschliffbereich ein Auslaufbereich mit konstantem Radius anschließt.

8. Schälbohrer nach einem der Ansprüche 5 bis 7,
**dadurch gekennzeichnet, dass** der Hinterschliff (14) jeweils an einem in Umfangsrichtung um 20° hinter der Schneidkante (10) liegenden Meßpunkt in radialer Richtung etwa 0,07 mm bis 0,12 mm, insbesondere etwa 0,1 mm beträgt.

9. Schälbohrer nach Anspruch 7 oder 8,
**dadurch gekennzeichnet, dass** jede Schleifzone (16) eine axial gemessene Länge bzw. Höhe im Bereich von 2 mm bis 8 mm, insbesondere etwa 5 mm, aufweist.

10. Schälbohrer nach einem der Ansprüche 1 bis 9,
**dadurch gekennzeichnet, dass** die/jede Schneidkante (10) in jedem Punkt ihres Verlaufes einen bestimmten Spiralwinkel (β) zur Längsachse (2) definiert.

11. Schälbohrer nach Anspruch 10,
**dadurch gekennzeichnet, dass** der Spiralwinkel (β) über den Verlauf der Schneidkante (10) hinweg mit zunehmendem Bohrdurchmesser ansteigt, und zwar insbesondere etwa in einem Bereich von ca. 25° bis ca. 30°.

12. Schälbohrer nach Anspruch 10,
**dadurch gekennzeichnet, dass** der Spiralwinkel (β) über den Verlauf der Schneidkante (10) hinweg im Wesentlichen konstant ist und insbesondere etwa 25° beträgt.

13. Schälbohrer nach Anspruch 10,
**dadurch gekennzeichnet, dass** der Spiralwinkel (β) über den Verlauf der Schneidkante (10) hinweg mit zunehmendem Bohrdurchmesser abnimmt, und zwar insbesondere etwa in einem Bereich von ca. 30° bis ca. 25°.

14. Schälbohrer nach einem der Ansprüche 1 bis 13,
**dadurch gekennzeichnet, dass** der Schneidenteil (4) auf seiner Seite mit kleinstem Durchmesser in eine Anbohrspitze (20) insbesondere nach Art eines Spiralbohrers übergeht.

15. Schälbohrer nach Anspruch 14,
**dadurch gekennzeichnet, dass** die/jede Spannut (8) des Schneidenteils (4) bis über die Anbohrspitze (20) hinweg und bis zu deren vorderem Ende verläuft.

16. Schälbohrer nach einem der Ansprüche 1 bis 15,
**dadurch gekennzeichnet, dass** der Schneidenteil (4) mit seiner konischen Mantelfläche (6) einen Konuswinkel (γ) definiert, der im Bereich von 20° bis 50°, vorzugsweise 22° bis 30°, liegt und insbesondere größer als 23° ist.

17. Schälbohrer nach einem der Ansprüche 1 bis 15,
**dadurch gekennzeichnet, dass** der Schneidenteil (4) aus zwei Abschnitten (4a, 4b) mit im Wesentlichen konischen Mantelflächen (6a, 6b) besteht, wobei ein hinterer Abschnitt (4a) mit größerem Durchmesserbereich einen kleineren Konuswinkel (γ₁) vorzugsweise etwa im Bereich von 20° bis 50°, insbesondere größer als 23°, und ein vorderer Abschnitt (4b) mit kleinerem Durchmesserbereich einen größeren Konuswinkel (γ₂) vorzugsweise etwa im Bereich von 90° aufweisen.

18. Schälbohrer nach einem der Ansprüche 1 bis 17,
**dadurch gekennzeichnet, dass** sich an den Schneidenteil (4) auf seiner Seite mit größtem Durchmesser ein Einspannschaft (22) anschließt.

19. Schälbohrer nach Anspruch 18,
**dadurch gekennzeichnet, dass** der Einspannschaft (22) eine Anzahl n ≥ 2 von Spannflächen (24) zur Anlage von Spannbacken eines Spannfutters aufweist, wobei jede Spannfläche (24) - in einer vorbestimmten Werkzeug-Rotationsrichtung (26) gesehen - zwischen einem Anfangspunkt (28) und einem Endpunkt (30) einen Schaftradius (r) aufweist, der von einem minimalen Wert am Anfangspunkt (28) über einen Anstiegswinkelbereich (A) hinweg auf einen maximalen Wert am Endpunkt (30) ansteigt.

20. Schälbohrer nach Anspruch 19,
**dadurch gekennzeichnet, dass** sich an den auf dem maximalen Radius-Wert liegenden Endpunkt (30) jeder Spannfläche (24) - in der Rotationsrichtung (26) gesehen - eine radial relativ steil abfallende Übergangsfläche (32) anschließt, die über einen Abfallwinkelbereich (B) hinweg bis zu dem auf dem minimalen Radius-Wert liegenden Anfangspunkt (28) der nächsten benachbarten Spannfläche (24) abfällt.

21. Schälbohrer nach Anspruch 19 oder 20,
**dadurch gekennzeichnet, dass** der Anstiegswinkelbereich (A) jeder Spannfläche (24) etwa 85 % bis 95 %, insbesondere etwa 90 %, eines Spannschaft-Teilungswinkels 360°/n beträgt.
